# EUROPÄISCHE PATENTSCHRIFT

(11) **EP 4 109 810 B1**
(45) Veröffentlichungstag und Bekanntmachung des Hinweises auf die Patenterteilung: **17.01.2024**
(21) Anmeldenummer: 21181523.8
(22) Anmeldetag: 24.06.2021
(51) Int. Cl.: H04L 9/08

(54) **EINBEZIEHUNG MOBILFUNKNETZBASIERTER KOMMUNIKATIONSEINRICHTUNGEN IN EINE QUANTENSICHERE SCHLÜSSEL BEREITSTELLENDE INFRASTRUKTUR**
INCORPORATION OF MOBILE RADIO NETWORK BASED COMMUNICATION DEVICES INTO AN INFRASTRUCTURE FOR PROVIDING QUANTUM SECURE KEYS
INTÉGRATION DES DISPOSITIFS DE COMMUNICATION BASÉS SUR UN RÉSEAU MOBILE DANS UNE INFRASTRUCTURE DE FOURNITURE DES CLÉS QUANTIQUES SÛRES

(43) Veröffentlichungstag der Anmeldung: 28.12.2022
(73) Patentinhaber: Deutsche Telekom AG, 53113 Bonn (DE)
(72) Erfinder: GEITZ, Marc, 58089 Hagen (DE); BRAUN, Ralf-Peter, 12305 Berlin (DE)
(74) Vertreter: Nern, Peter-Michael

(56) Entgegenhaltungen:
- WO-A1-2021/090027
- DOUGLAS STEBILA ET AL: "Post-Quantum Key Exchange for the Internet and the Open Quantum Safe Project", IACR, INTERNATIONAL ASSOCIATION FOR CRYPTOLOGIC RESEARCH, Bd. 20161027:210952, 26. Oktober 2016 (2016-10-26), Seiten 1-21, XP061021998, [gefunden am 2016-10-26]

## Beschreibung

Die Erfindung betrifft eine Lösung für die Bereitstellung mithilfe quantenmechanischer Mittel erzeugter und demgemäß quantensicherer Schlüssel zur Nutzung mit mobilfunknetzbasierten Kommunikationseinrichtungen (im Weiteren auch MKE), das heißt mit Kommunikationseinrichtungen, welche Daten mit anderen Kommunikationseinrichtungen über ein Mobilfunknetz austauschen. Sie bezieht sich auf die Möglichkeit, einer Bereitstellung und Nutzung quantensicher Schlüssel als Nutzschlüssel mittels derartiger MKE, welche selbst nicht, wie zum Beispiel QKD-Systeme, also Systeme der Quantum Key Distribution, mit quantenmechanischen Mitteln zur Erzeugung quantensicherer Schlüssel ausgestattet sind oder über die Möglichkeit verfügen, Verbindungen mit anderen Kommunikationseinrichtungen über einen Quantenkanal aufzubauen.

Gegenstände der Erfindung sind ein Verfahren zur Bereitstellung quantensicherer Schlüssel zur Nutzung mit den vorgenannten MKE, ein System zur Durchführung des Verfahrens und eine in spezieller Weise ausgebildete Kommunikationseinrichtung (MKE), wie beispielsweise ein mobiles Endgerät (zum Beispiel Smartphone) als Bestandteil eines solchen Systems.

Quantencomputer werden nach Ansicht hierzu aussagefähiger Fachleute bereits innerhalb der nächsten Dekade dazu in der Lage sein, heute noch als sicher angesehene, verbreitet eingesetzte Verschlüsselungsverfahren, welche beispielsweise auf der Primfaktorenzerlegung (RSA oder Diffie-Hellman) oder auf Algorithmen auf der Basis elliptischer Kurven (Elliptic Curve Digital Signature Algorithm, ECDSA) basieren, zu brechen. Andererseits kommt der gesicherten Übertragung von Daten über Kommunikationsnetze, zum Beispiel im Zusammenhang mit dem Ausbau der 5G-Mobilfunknetze und beispielsweise deren Nutzung für die Car-to-Car-Kommunikation oder für die Übertragung von Daten zur Steuerung von Maschinen im Rahmen von Industrie 4.0 oder aber auch im Zusammenhang mit der zunehmenden Nutzung von Smart Home Technologien sowie von Internet of Things (IoT) Anwendungen, eine immer noch ständig steigende Bedeutung zu. Diese Sicherheit wird durch eine Verschlüsselung der Daten, derzeit noch mittels der bereits angesprochenen Verschlüsselungsverfahren, gewährleistet.

Die fortschreitende Entwicklung von Quantencomputern erfordert aber, unter anderem auch unter dem Aspekt der Langlebigkeit vieler Produkte und Industrieerzeugnisse, bereits heute die Entwicklung und den Einsatz neuer Verschlüsselungstechniken und Verfahren. Während die bisher gebräuchlichen Verfahren auf der Annahme beruhen, dass sie auch unter Einsatz einer größeren Zahl parallel arbeitender moderner, aber mittels herkömmlicher Technik, das heißt nicht unter Einsatz der Quantenmechanik realisierter Computer, nicht zu brechen sind, gilt dies für unter Verwendung von Quantencomputern geführte Angriffe zukünftig nicht mehr. Es gilt daher, Verschlüsselungsverfahren zu finden, welche auch einem Angriff mit Quantencomputern widerstehen können. Eine Möglichkeit, diesem Erfordernis zu entsprechen, besteht darin, sich auch zum Zweck der Verschlüsselung quantenmechanischer Verfahren zu bedienen.

Entsprechende, zum vorgenannten Zweck entwickelte Verfahren, welche gleichzeitig die Erzeugung kryptographischer Schlüssel auf quantenmechanischer Basis und deren Verteilung ermöglichen, werden unter dem Begriff QKD-Verfahren, QKD = Quantum Key Distribution, zusammengefasst. Eines dieser Verfahren, welches bereits auch für die Nutzung in der Praxis umgesetzt wird, ist das QKD-Verfahren nach dem BB84-Protokoll. Bei den QKD-Verfahren handelt es sich um symmetrische Verschlüsselungsverfahren, welche das bei herkömmlichen Verschlüsselungsverfahren bestehende Problem des geschützten Austausches des zur symmetrischen Verschlüsselung genutzten Schlüssels durch den Einsatz quantenmechanischer Wirkprinzipien lösen. Quantensichere Schlüssel können zudem mittels quantenmechanische Effekte nutzender Zufallszahlengeneratoren erzeugt werden, wobei ein solcher Quantum Random Number Generator (QRNG), anders als manche andere, nach klassischen Verfahren arbeitende und ebenfalls als Zufallszahlengenerator bezeichnete Einrichtungen, tatsächlich zufällige Zahlen, das heißt Zufallszahlen hoher Entropie, erzeugt.

Allerdings ist die Errichtung QKD-Verfahren nutzender Infrastrukturen sehr aufwendig und insbesondere kostenintensiv. Zudem ist - Stand jetzt - nicht davon auszugehen, dass es in absehbarer Zeit technisch überhaupt möglich sein wird, die für die Nutzung der QKD-Technik notwendigen Komponenten in typischerweise sehr kompakte und/oder durch ihre Nutzer mitführbare Endgeräte für den Mobilfunk zu integrieren. Aber selbst, wenn es gelingen sollte, diese technische Herausforderung zu meistern und die hiermit verbundenen technischen Probleme zu lösen, dürfte auch hier der Kostenfaktor ein enormes Hemmnis bilden. Nämlich dann, wenn es darum geht, diese Technik, im Hinblick auf die hohe Penetration moderner Industriegesellschaften mit Mobilfunkgeräten, respektive Endgeräten für den Mobilfunk oder auf die beispielsweise für künftig vorgesehene Anwendungen des IoT (Internet of Things) benötigte extreme Anzahl mobilfunknetzbasierter Einrichtungen, für den Massenmarkt verfügbar zu machen.

Eine gegenüber einer breiten Nutzung der QKD-Technik preiswertere Alternative bilden voraussichtlich in jüngerer Zeit verstärkt fortentwickelte und in der Validierung befindliche Verfahren der Post Quantum Cryptography (PQC). Es handelt sich hierbei um eine Gruppe insoweit als klassisch anzusehender Kryptographie-Verfahren, als diese Verfahren nicht auf der Nutzung quantenmechanischer Effekte beruhen. Es handelt sich vielmehr um Verfahren, die auf komplexen mathematischen Problemen beruhen, für die angenommen wird, dass sie auch rechentechnischen Fähigkeiten von Quantencomputern widerstehen können. Während die zumindest theoretisch bestehende absolute Sicherheit gegenüber Angriffsversuchen für QKD-Verfahren bewiesen ist, gilt dies für PQC-Verfahren nicht. Sie basieren lediglich auf der Annahme, dass sie auch mittels Quantencomputern nicht auszuhebeln sind, wobei aber ein Gegenbeweis tatsächlich bisher nicht erbracht werden konnte. Für besonders sensible Bereiche wird man daher dennoch, trotz der damit verbundenen Kosten, künftig auf den Einsatz von QKD-Verfahren setzen.

Die Patentoffenlegungsschrift WO 2021/090027 A1 offenbart einen Repository, auf dem sowohl quantensicher verschlüsselte Daten abgespeichert sind, als auch die dazugehörigen Quantenschlüssel, gesondert verschlüsselt, hinterlegt sind. Auf Anfrage kann der abgespeicherte Schlüssel entschlüsselt, und die entsprechenden Daten entschlüsselt werden.

D. Stebila et al: "Post-Quantum Key Exchange for the Internet and the Open Quantum Safe Project", offenbart einen postquantischen Schlüsselaustausch mit Anwendung auf Internetprotokolle.

Aufgabe der Erfindung ist es, eine Lösung bereitzustellen, welche es mobilfunknetzbasierten Kommunikationseinrichtungen MKE ermöglicht, zur Verschlüsselung zwischen ihnen und mindestens einer anderen Kommunikationseinrichtung über das Mobilfunknetz ausgetauschter Daten quantensichere Schlüssel, nämlich insbesondere mithilfe quantenmechanischer Mittel erzeugte Schlüssel, zu verwenden, auch wenn die betreffenden MKE selbst nicht über quantenmechanische Mittel verfügen. Hierzu sind ein entsprechendes Verfahren und eine zu dessen Durchführung in geeigneter Weise ausgebildete Kommunikationseinrichtung (MKE) anzugeben sowie ein diese MKE zur Ausbildung einer entsprechenden Infrastruktur einbeziehendes System bereitzustellen.

An dieser Stelle soll zunächst eine Auflistung wesentlicher, teilweise bereits vorstehend sowie nachfolgend verwendeter Abkürzungen erfolgen, unter Angabe dessen, wofür diese jeweils stehen:
- AES: Advanced Encryption Standard
- ECDSA: Elliptic Curve Digital Signature Algorithm
- HSM: Hardware Security Module (Hardwaresicherheitsmodul)
- IoT: Internet of Things
- KEM: Key Encapsulation Mechanism
- Key Mgt: Key Management (Schlüsselmanagement)
- LOS: Line of Sight
- MKE: mobilfunknetzbasierte Kommunikationseinrichtung
- PQC: Post Quantum Cryptography
- QKD: Quantum Key Distribution
- QRND: Quantum Random Number Generator
- RSA: Verschlüsselungsverfahren nach Rivest, Shamir, Adleman
- TLS: Transport Layer Security
- VPN: Virtual Private Network (virtuelles privates Netzwerk)
- XOR: Exclusives Oder (hier stets bitweises XOR)

Unter einer MKE soll nachfolgend und in den Patentansprüchen eine mobilfunknetzbasierte Kommunikationseinrichtung verstanden werden, das heißt eine Kommunikationseinrichtung, welche mit anderen Kommunikationseinrichtungen über ein Mobilfunknetz kommuniziert, also für eine ein Mobilfunknetz nutzende Kommunikation ausgebildet ist. Bei dieser MKE, kann es sich um ein mobiles Endgerät, wie beispielsweise ein Smartphone, einen Tablet-PC oder dergleichen handeln. Unter anderem im Hinblick auf das sich etablierende Internet of Things (IoT) kann es sich bei der MKE aber auch um eine stationäre, beispielsweise als Teil einer Einrichtung oder Anlage oder eines komplexeren Systems angeordnete Einrichtung handeln, welche von ihr selbst oder von der Einrichtung/Anlage oder dem System, deren/dessen Bestandteil sie ist, genutzte Daten (hierzu zählen gegebenenfalls auch Sprache sowie natürlich Bilder oder sonstige Daten) mit anderen Kommunikationseinrichtungen über ein Mobilfunknetz austauscht. Soweit die MKE Teil einer umfassenderen Einrichtung einer Anlage oder eines Systems ist, schließt dies nicht aus, dass diese Einrichtung/Anlage/das System auch noch über andere Kommunikationsmittel und -Wege verfügt. Die MKE verfügt aber gemäß dem hier zugrunde gelegten Verständnis, wie schon mehrfach ausgeführt, jedenfalls selbst nicht über quantenmechanische Mittel und hat abseits der hier beschriebenen technischen Lösung auch keinen Zugriff auf derartige Mittel.

Die Aufgabe wird durch ein Verfahren mit den Merkmalen des Patentanspruchs 1 gelöst. Eine die Aufgabe lösende, zur Durchführung des Verfahrens geeignete MKE wird durch den ersten Sachanspruch charakterisiert. Der unabhängige Systemanspruch charakterisiert ein System, in welches die vorgenannte MKE bei der Durchführung des Verfahrens einbezogen ist. Vorteilhafte Aus- und Weiterbildungen der Erfindung sind durch die jeweiligen Unteransprüche gegeben.

Das die Aufgabe lösende Verfahren dient der Bereitstellung quantensicherer Schlüssel zur Verwendung mit einer mobilfunknetzbasierten Kommunikationseinrichtungen MKE, wie beispielsweise einem mobilen Endgerät. Es dient genauer gesagt der Bereitstellung mithilfe quantenmechanischer Mittel erzeugter Schlüssel für eine solche MKE. Derartige, für die Verwendung mit einer entsprechend ausgebildeten MKE bereitgestellte quantenmechanisch erzeugte Schlüssel werden in den nachfolgenden Ausführungen und im Kontext der Patentansprüche zur Unterscheidung von anderen im Zusammenhang mit der Darstellung der Erfindung angesprochenen quantensicheren oder zumindest als quantensicher geltenden Schlüsseln als Nutzschlüssel bezeichnet.

Diese, wie gesagt, ausschließlich der Unterscheidung dienende Bezeichnung leitet sich davon ab, dass die betreffenden Schlüssel (Nutzschlüssel) zur Verschlüsselung von Daten, nämlich Nutzdaten, verwendet werden können, welche die sie verwendende MKE mit einer oder mehreren anderen, ebenfalls über diese Nutzschlüssel verfügenden Kommunikationseinrichtungen austauscht. Ausdrücklich sei hierbei angemerkt, dass es sich bei den vorgenannten Nutzdaten nicht zwingend um reine Anwendungsdaten, wie beispielsweise mediale Inhalte, Programminformationen, Datenbankinformationen oder dergleichen, handeln muss. Vielmehr zählen zu solchen Nutzdaten beispielsweise auch Steuerdaten sowie gegebenenfalls auch andere zur späteren Verwendung, im Wege einer symmetrischen Verschlüsselung übertragene Schlüssel, unabhängig davon, ob es sich bei diesen selbst um quantensichere Schlüssel oder um unter Nutzung anderer Mechanismen erzeugte Schlüssel handelt.

Klargestellt sei auch, dass es sich bei den im Zusammenhang mit der Beschreibung und der beanspruchten Erfindung als Nutzschlüssel bezeichneten Schlüsseln stets um Schlüssel handelt, welche unter Einsatz quantenmechanischer Mittel und Verfahren erzeugt wurden. Dies ist im Gegensatz dazu bei anderen, im Kontext der Erfindung angesprochenen Schlüsseln nicht zwingend der Fall.

Der mindestens eine Nutzschlüssel (im Weiteren soll, sofern nicht ausdrücklich etwas anderes angegeben ist, vereinfachend von einem Nutzschlüssel gesprochen werden, selbst wenn es sich hierbei gegebenenfalls auch um mehrere Nutzschlüssel handeln kann) wird entsprechend dem die Aufgabe lösenden Verfahren durch einen mit quantenmechanischen Mitteln zu seiner Erzeugung ausgestatteten Bereitstellungsserver an die MKE übertragen. Die Übertragung des Nutzschlüssels an die MKE erfolgt hierbei über einen klassischen Kanal eines Mobilfunknetzes.

Zur Übertragung über den Mobilfunkkanal wird der mindestens eine Nutzschlüssel von dem Bereitstellungsserver durch Anwendung eines symmetrischen Verschlüsselungsverfahrens mit einem zuvor nach einem PQC-Verfahren, das heißt nach einem Verfahren der Post Quantum Cryptography, zwischen dem Bereitstellungsserver und der MKE als gemeinsames Geheimnis nach dem Prinzip der Key Encapsulation ausgetauschten Schlüssel symmetrisch verschlüsselt. Der Bereitstellungsserver umfasst hierbei einen PQC-Server, wobei außerdem die das vorgenannte Geheimnis nach einem PQC-Verfahren mit dem Bereitstellungsserver aushandelnde MKE zur Durchführung des betreffenden PQC-Verfahrens ausgebildet ist. Das zuvor bereits mehrfach angesprochene gemeinsame Geheimnis von Bereitstellungsserver und MKE soll nachfolgend - ebenfalls sprachlich vereinfachend - auch als PQC-Schlüssel bezeichnet werden.

Aus der unter Anwendung eines symmetrischen Verschlüsselungsverfahrens durch Verschlüsselung des Nutzschlüssels mit dem PQC-Schlüssel entstandenen und an die MKE übertragenen Bitsequenz wird durch die diese Bitsequenz empfangende MKE durch erneute Ausführung des vorgenannten symmetrischen Verschlüsselungsverfahrens unter abermaliger Anwendung des PQC-Schlüssels der mindestens eine Nutzschlüssel extrahiert.

Die Erfindung macht es sich also zunutze, dass unter Anwendung eines PQC-Verfahrens ausgehandelte Schlüssel aus heutiger Sicht ebenfalls als quantensicher, also als auch mittels Quantencomputern (zumindest in absehbarer Zeit) nicht zu brechen, gelten. Jedoch konnte für derartige, unter Anwendung eines PQC-Verfahrens ausgehandelte Schlüssel im Gegensatz zu quantenmechanisch erzeugten, (theoretisch bewiesen) quantensicheren Schlüsseln, nicht der Beweis erbracht werden, dass sie tatsächlich einem Angriff mit Quantencomputern standhalten. Andererseits konnte aber, auch das Gegenteil, also die Möglichkeit, solche Schlüssel mittels Quantencomputern zu brechen, bislang nicht bewiesen werden. Daher werden die betreffenden Schlüssel ebenfalls als quantensichere Schlüssel angesehen, aber hier zur Unterscheidung von den quantenmechanisch erzeugten Nutzschlüsseln, wie bereits ausgeführt, als PQC-Schlüssel bezeichnet.

Ein weiter wesentlicher Aspekt der Erfindung ist es aber, dass trotz der Annahme, PQC-Schlüssel seien quantensicher, die eigentlichen Nutzdaten, welche von einer MKE mit einer oder mehreren anderen Kommunikationseinrichtungen ausgetauscht werden, unter Verwendung des schon mehrfach angesprochenen, also quantenmechanisch erzeugten Nutzschlüssels verschlüsselt werden. Lediglich der entsprechende Nutzschlüssel selbst wird unter Nutzung eines mittels eines PQC-Verfahrens ausgehandelten PQC-Schlüssels zu diesem Zweck durch den Bereitstellungsserver in verschlüsselter Form (ebenfalls symmetrisch verschlüsselt) an die betreffende MKE übertragen. Das heißt der Nutzschlüssel wird bei seiner Übertragung an die MKE über das Mobilfunknetz vorteilhafterweise nicht offengelegt.

Nun wäre es selbstverständlich denkbar, auch die zwischen der vorgenannten MKE mit einer anderen Kommunikationseinrichtung ausgetauschten Nutzdaten symmetrisch unter Nutzung nach einem PQC-Verfahrens ausgehandelter Schlüssel (PQC-Schlüssel) zu verschlüsseln. Hierbei könnten diese Nutzdaten zwischen der MKE und der anderen Kommunikationseinrichtung selbstverständlich auch direkt, das heißt also, ohne über den Bereitstellungsserver zu gehen, über dann gegebenenfalls auch längere Übertragungspfade, die nicht durch den ungestörten Quantenkanal von QKD Systemen in ihrer Länge auf ca. 100 km begrenzt sind, ausgetauscht werden.

Durch die Anwendung des erfindungsgemäßen Verfahrens, bei dem lediglich der zur Verschlüsselung dieser Daten verwendete Nutzschlüssel zur Übertragung an die MKE sowie - damit er auch dort verfügbar ist - an die mit ihr kommunizierende andere Kommunikationseinrichtung mittels eines PQC-Schlüssels verschlüsselt wird, die anschließende Übertragung der Nutzdaten zwischen der MKE und der anderen Kommunikationseinrichtung, aber unter symmetrischer Verschlüsselung mit dem in jedem Falle quantensicheren Nutzschlüssel erfolgt, wird demnach allerdings die Übertragungsstrecke minimiert, auf welcher Daten mit einem gewissermaßen nur unterstellt quantensicheren Schlüssel (PQC-Schlüssel) verschlüsselt werden. Hierdurch erhöht sich die Sicherheit der Übertragung insgesamt.

Typischerweise ist es bekannten PQC-Verfahren immanent oder im Zusammenhang mit ins Auge gefassten Implementierungen solcher Verfahren üblich, dass zwei einen PQC-Schlüssel aushandelnde Entitäten, im vorliegenden Fall der Bereitstellungsserver und die von diesem Bereitstellungsserver mindestens einen Nutzschlüssel beziehende MKE, sich vor der Aushandlung eines gemeinsamen Geheimnisses (PQC-Schlüssel) untereinander authentifizieren. Soweit dies nicht der Fall sein sollte, ist es jedoch gemäß dem vorgeschlagenen Verfahren vorzugsweise vorgesehen, dass der Bereitstellungsserver und die MKE sich vor der Aushandlung des im Nachgang zur Übertragung des mindestens einen Nutzschlüssels verwendeten PQC-Schlüssels untereinander durch den Austausch einer mittels eines PQC-Signierverfahrens signierten Nachricht authentifizieren. Am Ende der Beschreibung werden in diesem Zusammenhang beispielhaft bisher bekannt gewordene PQC-Verfahrens (Post Quantum Cryptography Verfahren zur Aushandlung eines gemeinsam verwendeten Schlüssels) und PQC-Signierverfahren angegeben. Eine andere Möglichkeit der Authentifizierung besteht in der Verwendung von PQC-Zertifikaten durch den Bereitstellungsserver und die MKE.

Wie bereits ausgeführt, wird der dafür von dem, mit entsprechenden quantenmechanischen Mitteln ausgestatteten Bereitstellungsserver erzeugte Nutzschlüssel zur Übertragung an die ihn beziehende MKE unter Verwendung eines zuvor ausgehandelten PQC-Schlüssels symmetrisch verschlüsselt. Hierfür kommen unterschiedliche Möglichkeiten in Betracht. Eine vergleichsweise einfache Möglichkeit besteht in der bitweisen XOR-Verknüpfung des quantensicheren Nutzschlüssels mit dem sowohl bei dem Bereitstellungsserver als auch bei der MKE vorliegenden PQC-Schlüssel. Das heißt, der (mindestens eine) Nutzschlüssel wird von dem Bereitstellungsserver an die MKE übertragen mit einer Bitsequenz, welche in dem Bereitstellungsserver durch bitweise XOR-Verknüpfung des Nutzschlüssels mit dem PQC-Schlüssel gebildet wird. Und es heißt weiterhin, dass aus dieser Bitsequenz durch die sie empfangende MKE der mit ihr übertragene Nutzschlüssel extrahiert wird, indem die MKE die empfangene Bitsequenz abermals bitweise XOR mit dem PQC-Schlüssel verknüpft.

Nur vorsorglich sei in diesem Zusammenhang darauf hingewiesen, dass bei einer solchen Verfahrensgestaltung der Nutzschlüssel und der PQC-Schlüssel zum Zweck ihrer bitweisen XOR-Verknüpfung eine identische Länge aufweisen müssen. Sollte dies von vornherein nicht gegeben sein, wäre es grundsätzlich möglich, den kürzeren der beiden Schlüssel mit einer entsprechenden Anzahl jeweils auf 0 gesetzter oder jeweils auf 1 gesetzter Bits aufzufüllen. Allerdings könnte dies möglicherweise bereits wieder zu einer Verringerung der Sicherheit führen, so dass es zu bevorzugen ist, den PQC-Schlüssel von vornherein mit einer zum Nutzschlüssel identischen Bitlänge auszuführen.

In diesem Zusammenhang sei auch nochmals die Frage der Übertragung mindestens eines Nutzschlüssels in einem Übertragungsvorgang, also unter Verwendung eines PQC-Schlüssels, angesprochen. Für den Fachmann ist insoweit sicherlich unmittelbar erkennbar, dass in Abhängigkeit von der jeweiligen Länge des PQC-Schlüssels auch mehr als nur ein Nutzschlüssel in einem Übertragungsvorgang an die MKE übertragen werden kann. So ist es beispielsweise denkbar, eine aus mehreren Nutzschlüsseln und vorzugsweise mehreren jeweils einen dieser Nutzschlüssel eindeutig identifizierenden Identifikatoren bestehende Zeichenkette mittels eines PQC-Schlüssels entsprechender Länge zu verschlüsseln und mit einem Übertragungsvorgang an die MKE zu übertragen.

Zur symmetrischen Verschlüsselung des (mindestens einen) Nutzschlüssels mit einem, respektive mit dem PQC-Schlüssel kommt ferner die Anwendung einer Blockchiffre in Betracht. So kann die Verschlüsselung des Nutzschlüssels beispielsweise mittels des AES, also nach dem in Advance Encryption Standard festgelegten Verschlüsselungsmechanismus erfolgen.

Der zur symmetrischen Verschlüsselung des Nutzschlüssels - beispielsweise durch bitweise XOR-Verknüpfung oder durch die Anwendung des AES - genutzte PQC-Schlüssel (gemeinsames Geheimnis) kann ebenfalls ein absolut quantensicherer, das heißt mithilfe der quantenmechanischen Mittel des Bereitstellungsservers erzeugter Schlüssel sein. Hierbei kann der betreffende Schlüssel, also der quantensichere PQC-Schlüssel, unter Nutzung des PQC-Verfahrens als asymmetrisches Public Key Verfahren nach dem Prinzips der Key-Encapsulation zwischen dem Bereitstellungsserver und der MKE übertragen werden.

Für die Erzeugung quantensicherer Schlüssel, also insbesondere des mindestens einen Nutzschlüssels, aber auch von quantensicheren PQC-Schlüsseln, kommen unterschiedliche Möglichkeiten in Betracht. So können entsprechende Schlüssel gemäß einer ersten Möglichkeit durch einen QRNG, nämlich einen Quantum Random Number Generator, des Bereitstellungsservers erzeugt werden. Bei den zuvor schon mehrfach angesprochenen quantenmechanischen Mitteln des Bereitstellungsservers handelt es sich demnach in diesem Falle um einem Quantum Random Number Generator.

Eine andere Möglichkeit besteht darin, dass der Bereitstellungsserver Teil eines Netzwerkknotens ist, welcher mit einem anderen Netzwerkknoten in einer QKD-Beziehung steht. In diesem Falle werden die betreffenden quantensicheren Schlüssel (im Weiteren auch Quantenschlüssel) durch die beiden vorgenannten Netzwerkknoten unter Anwendung eines QKD-Verfahrens, nämlich eines Verfahrens der Quantum Key Distribution, wie beispielsweise das BB84-Protokoll, erzeugt und ausgetauscht. Dazu sind die entsprechenden Netzwerkknoten durch einen Quantenkanal, das heißt einen Kanal zur Übertragung quantenmechanischer Zustände, miteinander verbunden, welchem typischerweise ein klassischer Quantenprotokoll-Übertragungskanal (leitungsgebunden oder leitungslos) zugeordnet ist.

Unter Nutzung dieser zwischen den Netzwerkknoten bestehenden QKD-Beziehung erzeugte Quantenschlüssel liegen gemäß dem QKD-Prinzip, identisch zur gleichen Zeit in beiden Netzwerkknoten vor. Diese werden in einem dafür vorgesehenen, von einem Schlüsselmanagement (Key-Management) verwalteten Speicher des Bereitstellungsservers abgelegt. Mithilfe des vorgenannten Key-Managements kann der Bereitstellungsserver bei Anforderung eines Nutzschlüssels durch eine zur Durchführung des Verfahrens ausgebildete MKE nach Aushandlung eines PQC-Schlüssels mit dieser MKE auf den Schlüsselspeicher zugreifen und einen daraus entnommenen quantensicheren Schlüssel unter Verschlüsselung mit dem PQC-Schlüssel als Nutzschlüssel an die MKE übertragen.

Darüber hinaus kann aber der mindestens eine einer MKE zur Verfügung gestellte Nutzschlüssel auch durch einen Quantencomputer mit überwachter Entropie und überwachter Authentizität erzeugt werden. Die Überwachung der Entropie der mittels des Quantencomputers erzeugten, als Schlüssel verwendeten oder der Berechnung von Schlüsseln dienenden Zufallszahlen kann dabei beispielsweise mittels eines mit dem Quantencomputer dazu in einer Wirkverbindung stehenden klassischen Computers erfolgen.

Je nach Ausgestaltung des Verfahrens und Beschaffenheit der MKE, welcher Nutzschlüssel durch den Bereitstellungsserver zur Verfügung gestellt werden, kann ein jeweiliger Nutzschlüssel unmittelbar vor seiner weiteren Verwendung zur symmetrischen Datenverschlüsselung jeweils von dem Bereitstellungsserver an die MKE übertragen werden. Sofern die MKE jedoch über einen Speicher verfügt, in welchem Quantenschlüssel manipulationssicher abgelegt werden können, kann das Verfahren auch so gestaltet sein, dass durch den Bereitstellungsserver in einem oder in mehreren Übertragungsvorgängen mehrere quantensichere Nutzschlüssel an die MKE übertragen werden und diese dort zur späteren Verwendung in dem vorgenannten Speicher in Zuordnung zu sie jeweils eindeutig bezeichnenden Identifikatoren abgelegt werden.

Das Verfahren ist vorzugsweise so gestaltet, dass die beteiligen Kommunikationsgeräte oder -Kommunikationseinrichtungen, nämlich zumindest der Bereitstellungsserver und wenigstens eine von diesem mit mindestens einem Nutzschlüssel versorgte MKE, in einem Virtual Privat Network (VPN) miteinander verbunden sind und die Übertragung sämtlicher Schlüssel (Nutzschlüssel sowie PQC-Schüssel) über entsprechende VPN-Verbindungen erfolgt.

Bei dem hier beschriebenen Verfahren handelt es sich, wie bereits ausgeführt, um ein Verfahren für die Bereitstellung quantensicherer Nutzschlüssel für mobilfunknetzbasierte Kommunikationseinrichtungen MKE und zur Verwendung der betreffenden Nutzschlüssel mit der betreffenden MKE. In Ausgestaltung des Verfahrens kann daher der mindestens eine quantensichere Nutzschlüssel von der vorher wiederholt angesprochenen MKE für einen verschlüsselten Datenaustausch mit einer anderen, in ähnlicher Weise ausgebildeten MKE, beispielsweise einem mobilen Endgerät, verwendet werden. Dieser Austausch symmetrisch verschlüsselter Daten kann dabei entweder über den Bereitstellungsserver oder aber auch direkt mit der anderen MKE erfolgen.

Im letztgenannten Fall wird die vorgenannte andere MKE zuvor durch den Bereitstellungsserver ebenfalls unter Anwendung eines PQC-Verfahrens mit demselben mindestens einen Nutzschlüssel versorgt. An dieser Stelle sei jedoch ausdrücklich darauf hingewiesen, dass es sich bei dem unter Verwendung des mindestens einen Nutzschlüssels erfolgenden, symmetrisch verschlüsselten Datenaustausch gegebenenfalls auch um einen über einen klassischen Kanal, insbesondere über ein Mobilfunknetz, zwischen dem Bereitstellungsserver selbst oder einer komplexeren, den Bereitstellungsserver umfassenden Kommunikationseinrichtung (beispielsweise Netzwerkknoten) und der von dem Bereitstellungsserver mit Nutzschlüsseln versorgten MKE handeln kann.

Demgemäß besteht ein zur Lösung der Aufgabe ausgebildetes System für die Bereitstellung quantensicherer Schlüssel und zu deren Verwendung als Nutzschlüssel mindestens aus einem diese Nutzschlüssel bereitstellenden Bereitstellungsserver sowie aus wenigstens einer mobilfunknetzbasierten Kommunikationseinrichtung MKE. Hierbei ist der vorgenannte Bereitstellungsserver mit quantenmechanischen Mitteln zur Erzeugung quantensicherer, später als Nutzschlüssel zu verwendender Schlüssel ausgestattet und zur Aussendung von Daten, wie beispielsweise zur Aussendung dieser Nutzschlüssel, über ein Mobilfunknetz ausgebildet. Das heißt, der Bereitstellungsserver verfügt über entsprechende Sende- und Empfangsmittel für den Mobilfunk.

Die mindestens eine MKE, welche selbst nicht mit quantenmechanischen Mitteln ausgestattet ist, ist selbstverständlich zur Anforderung quantensicherer Nutzschlüssel bei dem vorgenannten Bereitstellungsserver und zu deren Empfang vom Bereitstellungsserver über eine Mobilfunkverbindung ausgebildet. Sie ist ferner dazu ausgebildet - verfügt also über entsprechende Verschlüsselungs-und Entschlüsselungseinheiten -, mit mindestens einer anderen, ebenfalls über den mindestens einen Nutzschlüssel verfügenden Kommunikationseinrichtung Nutzdaten unter symmetrischer Verschlüsselung dieser Daten mit dem Nutzschlüssel auszutauschen.

Sowohl der Bereitstellungsserver als auch die vorgenannte, mindestens eine MKE des Systems, verfügen über Mittel zur Aushandlung eines von ihnen zur symmetrisch verschlüsselten Übertragung mindestens eines Nutzschlüssels verwendeten gemeinsamen Geheimnisses nach einem PQC-Verfahren, also einem Verfahren der Post Quantum Cryptography. Darüber hinaus kann das System mindestens eine weitere MKE umfassen, welche ebenfalls für den Bezug mindestens eines bei dem Bereitstellungsserver quantenmechanisch erzeugten Nutzschlüssels durch eine verschlüsselte Übertragung dieses mindestens einen Nutzschlüssels unter Verwendung eines zuvor zwischen dem Bereitstellungsserver und dieser mindestens einen weiteren MKE nach einem PQC-Verfahren ausgehandelten gemeinsamen Geheimnisses (PQC-Schlüssel), ausgebildet ist.

Die MKE muss in der Lage sein, über PQC Verschlüsselungsverfahren per Key Encapsulation einen kryptographischen Schlüssel mit einem QKD-Netz, respektive mit dem Bereitstellungsserver austauschen zu können. Die ausgetauschten Schlüssel können in einem Schlüsselspeicher für kurze Zeit bevorratet werden, alternativ werden die Schlüssel im Bedarfsfalle erzeugt. Somit kann jede MKE sich mit einer Applikation in dem QKD-Netzwerk, oder mit einer weiteren mobilen Applikation, das heißt insbesondere mit einer weiteren in vergleichbarer Weise ausgebildeten MKE, welche in das QKD-Netzwerk integriert ist, verbinden und eine hochsichere Datenkommunikation durchführen.

Der Bereitstellungsserver des zuvor beschriebenen Systems kann, wie schon bei der Beschreibung des Verfahrens angedeutet, Teil eines größeren Verbundes telekommunikativer Einrichtungen sein. Er kann insbesondere Teil eines Netzwerkknotens sein, welcher zur Erzeugung quantensicherer Schlüssel, das heißt zur Erzeugung von Schlüsseln mithilfe quantenmechanischer Mittel, mit einem anderen Netzwerkknoten über einen Quantenkanal in einer QKD-Beziehung steht.

Anhand von Zeichnungen sollen nachfolgend Ausführungen zu Details der Erfindung und zu möglichen Ausführungsbeispielen gegeben werden. Die Zeichnungen zeigen im Einzelnen:
- Fig. 1:: die schematische Darstellung einer möglichen Ausbildungsform des Systems gemäß einer Minimalvariante,
- Fig. 2:: eine weitere Ausbildungsform des erfindungsgemäßen Systems entsprechend einer praxisrelevanten Variante,
- Fig. 3:: die bei der Ausbildungsform des Systems gemäß Fig. 2 ablaufenden Übertragungsvorgänge.

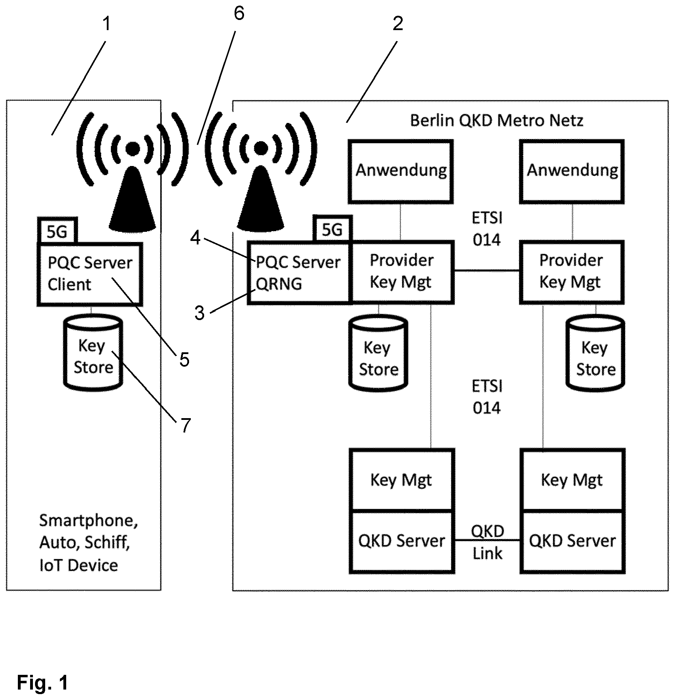

Die Fig. 1 zeigt das erfindungsgemäße System entsprechend einer Minimalvariante in einer schematischen Darstellung. Demnach sind zwingende Bestandteile des Systems ein mit quantenmechanischen, respektive quantenmechanischen Mitteln 3 zur Erzeugung quantensicherer Schlüssel, das heißt zur Erzeugung von Schlüsseln unter Nutzung quantenmechanischer Zustände ausgestatteter Bereitstellungsserver 2 und mindestens eine diese quantensicheren Schlüssel von dem Bereitstellungsserver 2 beziehende mobilfunknetzbasierte Kommunikationseinrichtung MKE 1, 1₁, 1ₙ, welche selbst nicht über quantenmechanische Mittel verfügt.

In dem gezeigten Beispiel umfasst der Bereitstellungsserver 2 einen QKD-Verbund, nämlich zwei, quantensichere Schlüssel nach einem Verfahren der Quantum Key Distribution gemeinsam erzeugende Netzwerkknoten eines Netzwerks, wie beispielsweise eines Metronetzes. Der vorgenannte QKD-Verbund besteht hierbei im Wesentlichen aus je einem QKD-Server mit quantenmechanischen Mitteln 3, wie insbesondere mindestens einem Laser und entsprechenden optischen Empfangseinrichtungen und einem Key-Management je Netzwerkknoten sowie einem Quantenkanal, beispielsweise in Form einer Glasfaserverbindung ohne optische Verstärkung zwischen den beiden Standorten und begrenzt auf eine Länge von höchstens ca. 100 km. Die in den beiden vorgenannten Netzwerkknoten des Metronetzes ausgebildeten QKD-Server sind über einen Quantenkanal (QKD-Link) miteinander verbunden.

Durch den QKD-Verbund werden fortwährend quantensichere Schlüssel und zugehörige, jeweils einen einzelnen dieser Schlüssel eindeutig bezeichnende Identifikatoren generiert. Durch das jeweilige Schlüsselmanagement (Key Management = Key Mgt) werden die erzeugten quantensicheren Schlüssel an ein Provider Key Management des jeweiligen Betreibers der Netzwerkknoten übergeben und dort gemeinsam mit den ihnen jeweils zugeordneten Identifikatoren in einem Schlüsselspeicher (Key Store) einer sicheren Hardwareumgebung gespeichert. Durch das Provider Key Management können die Schlüssel dann im Bedarfsfall sie benötigenden Anwendungen oder Endgeräten/Einrichtungen zur Verfügung gestellt werden.

Bei einer solchen, zuletzt genannten Einrichtung kann es sich beispielsweise um die zu dem dargestellten System gehörende (links dargestellte) MKE 1 handeln. Fordert diese MKE 1 bei dem Bereitstellungsserver 2 quantensichere Schlüssel zur späteren Verwendung für einen gesicherten, nämlich symmetrisch verschlüsselten Datenaustausch mit einer anderen Kommunikationseinrichtung an, bei welcher es sich auch um den Bereitstellungsserver 2 selbst handeln kann, so werden entsprechende Schlüssel durch den Bereitstellungsserver 2 an die anfordernde MKE 1 übertragen. Dort werden die empfangenen quantensicheren Schlüssel, wiederum in Zuordnung zu einem jeweiligen sie eindeutig bezeichnenden Identifikator, für die spätere Verwendung im Schlüsselspeicher 7 eines Hardwaresicherheitsmoduls (Hardware Security Modul - HSM) abgelegt.

Die Übertragung der durch die MKE 1 angeforderten quantensicheren Schlüssel erfolgt über einen klassischen Kanal, nämlich über eine herkömmliche Mobilfunkverbindung 6. Um dennoch zu vermeiden, dass die quantensicheren Schlüssel auf diesem Übertragungsweg durch einen Angreifer abgefangen oder in sonstiger Weise kompromittiert werden, erfolgt die Übertragung der Schlüssel in symmetrisch verschlüsselter Form. Genauer gesagt werden die durch den Bereitstellungsserver 2 erzeugten Schlüssel mittels eines zuvor zwischen der MKE 1 und dem Bereitstellungsserver 2 nach einem Verfahren der Post Quantum Cryptography (PQC) verabredeten PQC-Schlüssels symmetrisch verschlüsselt übertragen. Sowohl der Bereitstellungsserver 2 als auch die MKE 1 verfügen hierzu über entsprechende PQC-Mittel 4, 5. Das vorgenannte gemeinsame Geheimnis ist dabei unter Nutzung des asymmetrischen PQC-Verfahrens nach dem Prinzip der Key Encapsulation zwischen dem Bereitstellungsserver 2 und der MKE 1 ausgetauscht, vorzugsweise von dem Bereitstellungsserver 2 an die MKE 1 übertragen worden

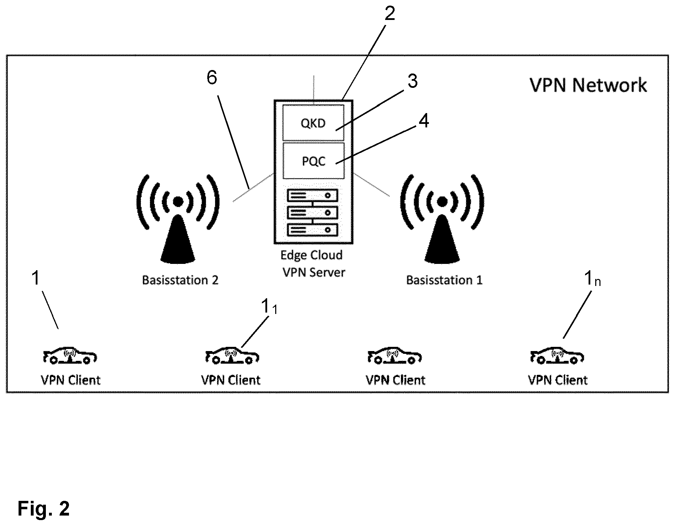

Die Fig. 2 zeigt eine mögliche praxisrelevante Umsetzung des erfindungsgemäßen Systems, ebenfalls in einer schematischen Darstellung. Hierbei ist der Bereitstellungsserver 2 Teil einer Edge Cloud Infrastruktur. Als Teil dieser Infrastruktur weist der Bereitstellungsserver 2 wiederum quantenmechanische Mittel 3 zur Erzeugung quantensicherer Schlüssel, nämlich beispielsweise einen Quantum Random Number Generator (QRNG) oder einen QKD-Verbund oder einen Quantencomputer, einen PQC-Server zur PQC-gesicherten Kommunikation mit mindestens einer, hier mit einer Mehrzahl von MKE 1, 1₁, 1ₙ (in den Kraftfahrzeuge angeordnete Einrichtungen zur Nutzung eines Mobilfunknetzes) und einen VPN-Server auf. Eine entsprechende Edge Cloud kann dabei 100 oder, je nach Ausprägung, mehr Funkzellen und deren Basisstationen mit quantensicheren Schlüsseln versorgen.

Gemäß dem gezeigten Beispiel werden die generierten quantensicheren Schlüssel durch den Bereitstellungsserver 2 über mehrere Basisstationen eines Mobilfunknetzes an eine Mehrzahl von mobilen Endgeräten (MKE 1, 1₁, 1ₙ) verteilt. Dem gezeigten Beispiel zufolge handelt es sich bei der vorgenannten Mehrzahl von MKE 1, 1₁, 1ₙ um in Kraftfahrzeugen angeordnete MKE 1, 1₁, 1ₙ für die Car-to-Car-Kommunikation. Der Bereitstellungsserver 2 und die MKE 1, 1₁, 1ₙ in den Fahrzeugen bilden, physisch vermittelt über das Mobilfunknetz und dessen Basisstationen, ein Virtual Privat Network, also ein VPN-Netzwerk, aus. Die durch die MKE 1, 1₁, 1ₙ in den Kraftfahrzeugen von dem Bereitstellungsserver 2 bezogenen quantensicheren Schlüssel werden durch die MKE 1, 1₁, 1ₙ für eine symmetrisch verschlüsselte Car-to-Car-Kommunikation verwendet.

Eine gemäß dem Verfahren realisierte gesicherte Peer-2-Peer Verbindung (Peer-to-Peer) in einem lokalen virtuellen Netzwerk ermöglicht neue Anwendungen im Bereich des autonomen Fahrens und der direkten Kommunikation von Verkehrsteilnehmern. Beispielsweise lassen sich so Peer-2-Peer Netzwerke, realisiert über Block Chains, quantensicher aufbauen und der Vorteil der direkten, niedriglatenten Kommunikation ausnutzen.

Als Alternative zu der Erfindung ließen sich quantensichere Verbindungen über "Line of Sight" (LOS) QKD Lösungen aufbauen. Bei diesen Lösungen wird die Funkstrecke über einen Quantenkanal realisiert, der die Antennen des Netzbetreibers mit der Mobilfunkeinrichtung (beispielsweise in einem Kraftfahrzeug) verbindet. Eine derartige Lösung benötigt aber pro Mobilfunkeinrichtung eine direkte LOS-Verbindung, die sich dem Bewegungsmuster der Mobilfunkeinrichtung anpassen muss, was in einem Verkehrsszenario derzeit schwierig und aufwändig zu realisieren sein dürfte. LOS-QKD ist derzeit eher eine Lösung für stationäre Endgeräte, die aber, wie ausgeführt, ebenfalls jederzeit minimal invasiv mit der erfindungsgemäßen Lösung ausgestattet werden können.

Die Sicherheit von IoT-Geräten (IoT = Internet of Things) als Endgeräte lässt sich ebenfalls durch die vorgestellte Lösung steigern. Dazu nehmen die IoT-Geräte die Rolle des MKE 1, 1₁, 1ₙ ein und die Backend Applikation ist an die den Bereitstellungsserver 2 umfassende QKD-Infrastruktur angeschlossen. Die IoT-Geräte bekommen einen Zugang zu dem VPN-Netz. Die Zertifikate, die den Zugang zu dem VPN-Netzwerk, also dem virtuellen Netzwerk, ermöglichen, müssen der MKE beim Verkauf mitgegeben werden. Das IoT-Gerät (MKE) kann während seines Betriebes einen Schlüssel von seinem IoT-Backend (Bereitstellungsserver 2) beziehen und diesen zur quantensicheren Übertragung seiner Daten nutzen. Auch lassen sich die VPN-Zugänge, Betriebssystem Updates oder Zertifikate an den MKE 1, 1₁, 1ₙ mit Hilfe der quantensicheren Schlüssel absichern.

Folgende bei der Umsetzung beachtliche Sicherheitsbetrachtungen und technische Erfordernisse lassen sich in diesem Zusammenhang treffen, respektive formulieren:
Die Sicherheit der vorgestellten Lösung hängt direkt von der Sicherheit der verwendeten kryptografischen Verfahren ab. Die theoretische Sicherheit des Quantenschlüsselaustausches ist bewiesen und hängt maßgeblich von der Gültigkeit der Gesetze der Quantenmechanik ab, während die praktische Sicherheit abhängig von der technischen Implementierung des QKD Systems und der Möglichkeiten von technischen Side Channels ist.

PQC-Krypto-Systeme werden zurzeit entwickelt, überprüft und unterliegen aufwändigen Standardisierungsbemühungen. Obwohl es keinen Beweis ihrer absoluten Sicherheit gibt, gelten die Algorithmen aufgrund geltender Annahmen und Kenntnisse über Algorithmen eines Quantencomputers als sicher.

Die VPN-Netze sind nur als Kommunikationshülle zu verstehen, die die Konnektivität der Bauteile/Geräte/Einrichtungen sicherstellt. Ein PQC-VPN-Verfahren zu verwenden wäre erstrebenswert, denn auch der Vergabeprozess der IP-Adressen wäre somit sicher. Es ist allerdings herauszustellen, dass die PQC-Aktoren die Authentizität des MKE 1, 1₁, 1ₙ sicherstellen müssen. Dies kann beispielsweise durch Nutzung von PQC-Signaturverfahren und deren Überprüfung durch den Kommunikationspartner vor Weiterverarbeitung der Schlüsselaustauschnachrichten geschehen.

Eine Modifikation der MKE 1, 1₁, 1ₙ, wie beispielsweise mobiler Endgeräte, ist nur beschränkt notwendig. Für eine Lösung ohne Schlüsselspeicher, das heißt, die MKE 1, 1₁, 1ₙ fragt nur einen Schlüssel an, falls ein Kommunikationsdienst mit hoher Sicherheit ausgeführt werden soll, benötigt die MKE nur die Fähigkeit ein PQC-KEM-Verschlüsselungsverfahren (KEM = Key Encapsulation Mechanism) ausführen zu können. Mit diesem Schlüssel lässt sich dann mit dem Kommunikationspartner, der an die QKD-Plattform (an den Bereitstellungsserver 2) angeschlossen ist, eine Zufallszahl per "Key Forwarding" Protokoll sicher austauschen. Diese Zufallszahl dient dann der symmetrischen Verschlüsselung des sicheren Datenverkehrs.

Sollte die MKE 1, 1₁, 1ₙ aber Schlüssel sicher speichern können, so kommt es zu zusätzlichen Anforderungen hinsichtlich Manipulationssicherheit der Hardware, das heißt es wird eine Anordnung der Sicherheitsrelevanten Elemente, wie insbesondere eines Schlüsselspeichers 7 und eine Key Managements in einen Hardware-Sicherheitsmodul HSM (Hardware Security Module) erforderlich. Der Schlüsselspeicher 7 sollte automatisch gelöscht werden, sofern Manipulationsversuche am Gerät stattfinden.

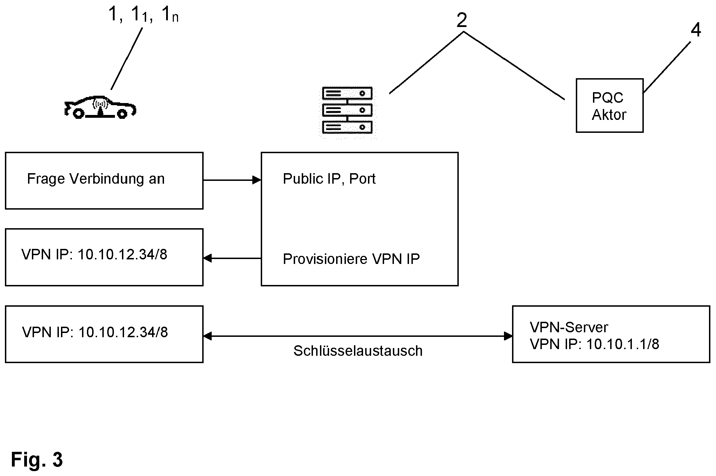

Die Fig. 3 zeigt beispielhaft und stark vereinfacht wesentliche Aspekte der beim Bezug quantensicherer Schlüssel durch eine MKE 1, 1₁, 1ₙ zwischen diesem und dem Bereitstellungsserver 2 ablaufenden Übertragungsvorgänge. Bei einem VPN-Server einer Edge Cloud Infrastruktur gemäß der Fig. 2 fragt das in einem Kraftfahrzeug angeordnete, erfindungsgemäß mit Einrichtungen zur Anwendung der PQC ausgestattete MKE 1, 1₁, 1ₙ den Aufbau einer VPN-Verbindung an. Der VPN-Server 4 der Edge Cloud Infrastruktur mit dem Bereitstellungsserver 2 stellt für derartige Anfragen einen TAP-VPN-Dienst bereit, welcher durch die MKE 1, 1₁, 1ₙ über eine öffentlich zugängliche IP-Adresse des VPN-Servers kontaktierbar ist.

Sofern die Zugangsdaten der MKE 1, 1₁, 1ₙ korrekt sind, es insbesondere über entsprechende Zertifikate und Schlüssel, wie TLS-Schlüssel, verfügt, erhält die MKE vom VPN-Server der Edge Cloud Infrastruktur eine VPN-IP-Adresse und ist über diese Adresse temporäres Mitglied des in der Fig. 2 gezeigten VPN-Netzwerks. Unter Nutzung der der MKE 1, 1₁, 1ₙ zugeteilten VPN-IP-Adresse wird ein entsprechender VPN-Tunnel provisioniert, über den die MKE 1, 1₁, 1ₙ schließlich bei dem Bereitstellungsserver 2 der Cloud Edge Struktur quantensichere Schlüssel zur späteren Verwendung anfordert. Deren Übertragung erfolgt dann, wie bereits wiederholt ausgeführt, durch symmetrische Verschlüsselung mittels eines zuvor unter Anwendung eines PQC-Verfahrens zwischen der MKE 1, 1₁, 1ₙ und Bereitstellungsserver 2 ausgehandelten und per Key Encapsulation übertragenen gemeinsamen Geheimnisses, das heißt, eines PQC-Schlüssels.

Die vorgestellte Lösung bietet folgende Vorteile. Sie ermöglich die Einbindung von MKE 1, 1₁, 1ₙ (Smartphones, Computer, zum Beispiel auch in Form von Einbauten in Autos, Schiffen, IoT-Geräte) in eine QKD-Sicherheitsplattform. Die Lösung ist hierbei insbesondere auch geeignet für mobilfunknetzbasierte Kommunikationseinrichtungen MKE 1, 1₁, 1ₙ, die keine Glasfaseranbindung besitzen, nämlich insbesondere für sich bewegende Endgeräte.

Sie ermöglicht eine sofortige Verfügbarkeit gemangter quantensicherer Verbindungen in allen Mobilfunkzellen, an die Edge Cloud Server angeschlossen sind. Hierbei ermöglicht sie eine quantensichere Client - Server Kommunikationen sowie Client - Client Kommunikationen in Mobilfunknetzen, aber auch eine quantensichere mobilfunknetzbasierte Verbindung zwischen unterschiedlichen Netzen, respektive Netzsegmenten, sowie für netzübergreifende Applikationen, zum Beispiel bei der Realisierung des IoT oder der Industrie 4.0.

Die Erfindung ermöglicht sichere Peer-2-Peer Netzwerke (Peer-to-Peer), wie sie zum Beispiel für Anwendungen des mobilen Fahrens und beispielsweise unter Nutzung einer Blockchain. Hierbei ermöglicht die vorgestellte Lösung eine sichere Anbindung von mobilen Transportmitteln (Auto, LKW, Flugzeug, Schiffe) und stationärer an das Mobilfunknetz angeschlossener Geräte (IoT, Weißgeräte) an eine nationale QKD-Sicherheitsplattform. Ferner ermöglicht sie sichere, nachträgliche Upgrades von Betriebssystemen oder Zertifikaten in den MKE 1, 1₁, 1ₙ.

Zu Ihrer Umsetzung wird im Grunde keine Änderung an bestehenden QKD-Systemen und Infrastrukturen erforderlich. Die Integration in bestehende QKD-Architekturen ist transparent und minimal invasiv möglich.

Wie an früherer Stelle angekündigt sollen nachfolgend Beispiele für im Rahmen der Erfindung anwendbare PQC-Signier- und -Verschlüsselungsverfahren gegeben werden.

### Verfügbare Post Quantum Signaturverfahren:

'DILITHIUM_2', 'DILITHIUM_3', 'DILITHIUM_4', 'MQDSS-31-48', MQDSS-31-64', SPHINCS+-Haraka-128f-robust', SPHINCS+-Haraka-128f-simple', 'SPHINCS+-Haraka-128s-robust', 'SPHINCS+-Haraka-128s-simple', 'SPHINCS+-Haraka-192f-robust', 'SPHINCS+-Haraka-192f-simple', 'SPHINCS+-Haraka-192s-robust', 'SPHINCS+-Haraka-192s-simple', 'SPHINCS+-Haraka-256f-robust', 'SPHINCS+-Haraka-256f-simple', 'SPHINCS+-Haraka-256s-robust', 'SPHINCS+-Haraka-256s-simple', 'SPHINCS+-SHA256-128f-robust', ,SPHINCS+-SHA256-128f-simple', 'SPHINCS+-SHA256-128s-robust', 'SPHINCS+-SHA256-128s-simple', 'SPHINCS+-SHA256-192f-robust', 'SPHINCS+-SHA256-192f-simple', 'SPHINCS+-SHA256-192s-robust', 'SPHINCS+-SHA256-192s-simple', 'SPHINCS+-SHA256-256f-robust', 'SPHINCS+-SHA256-256f-simple', 'SPHINCS+-SHA256-256s-robust', 'SPHINCS+-SHA256-256s-simple', 'SPHINCS+-SHAKE256-128f-robust', 'SPHINCS+-SHAKE256-128f-simple', 'SPHINCS+-SHAKE256-128s-robust', 'SPHINCS+-SHAKE256-128s-simple', 'SPHINCS+-SHAKE256-192f-robust', 'SPHINCS+-SHAKE256-192f-simple', 'SPHINCS+-SHAKE256-192s-robust', 'SPHINCS+-SHAKE256-192s-simple', 'SPHINCS+-SHAKE256-256f-robust', 'SPHINCS+-SHAKE256-256f-simple', 'SPHINCS+-SHAKE256-256s-robust', 'SPHINCS+-SHAKE256-256s-simple',m 'picnic L1_FS', 'picnic_L1_UR', 'picnic_L3_FS', 'picnic_L3_UR', 'picnic_L5_FS', 'picnic_L5_UR', 'picnic2_L1_FS', 'picnic2_L3_FS', 'picnic2_L5_FS', 'qTesla-p-I', 'qTesla-p-III'

### Verfügbare Post Quantum Verschlüsselungsverfahren

'BIKE1-L1-CPA', 'BIKE1-L3-CPA', 'BIKE1-L1-FO', 'BIKE1-L3-FO', 'Kyber512', 'Kyber768', 'Kyber1024', 'Kyber512-90s', 'Kyber768-90s', 'Kyber1024-90s', 'LEDAcryptKEM-LT12', 'LEDAcryptKEM-LT32', 'LEDAcryptKEM-LT52', 'NewHope-512-CCA', 'NewHope-1024-CCA', 'NTRU-HPS-2048-509', 'NTRU-HPS-2048-677', 'NTRU-HPS-4096-821', 'NTRU-HRSS-701', 'LightSaber-KEM', 'Saber-KEM', 'FireSaber-KEM', 'BabyBear', 'BabyBearEphem', 'MamaBear', 'MamaBearEphem', 'PapaBear', 'PapaBearEphem', ,FrodoKEM-640-AES', 'Fro-doKEM-640-SHAKE', 'FrodoKEM-976-AES', 'FrodoKEM-976-SHAKE', 'Fro-doKEM-1344-AES', 'FrodoKEM-1344-SHAKE', 'SIDH-p434', 'SIDH-p503', 'SIDH-p610', ,SIDH-p751', 'SIDH-p434-compressed', 'SIDH-p503-compressed', 'SIDH-p610-compressed', 'SIDH-p751-compressed', 'SIKE-p434', 'SIKE-p503', 'SIKE-p610', 'SIKE-p751', 'SIKE-p434-compressed', 'SIKE-p503-compressed', 'SIKE-p610-compressed', 'SIKE-p751-compressed'.

### Standardisierung der Systeme und Schnittstellen zum Quantenschlüsselaustausch

Das hier vorgestellte Verfahren nutzt die Standards und Verfahren, die in den jeweiligen nationalen und internationalen Standardisierungsgremien erarbeitet werden. Diese sind:
- National Standardization (NIST, IEEE)
- European Standardization (ETSI ISG QKD, ETSI TC Cyber WG QSC)
- Internationale Standardization (ISO /IEC, ITU, Quantum Internet Proposed Research Groupd, Crypto Forum Focus Group)

## Patentansprüche

1. Verfahren für die Bereitstellung quantensicherer, mithilfe quantenmechanischer Mittel erzeugter Schlüssel zur Verwendung mit selbst nicht über quantenmechanische Mittel verfügenden mobilfunknetzbasierten Kommunikationseinrichtungen MKE (1, 1₁, 1ₙ), welche Daten mit anderen Kommunikationseinrichtungen über ein Mobilfunknetz austauschen, wobei an eine MKE (1, 1₁, 1ₙ) mindestens ein quantensicherer Schlüssel durch einen mit quantenmechanischen Mitteln (3) zu dessen Erzeugung ausgestatten Bereitstellungsserver (2), zur Verwendung als Nutzschlüssel, das heißt zur symmetrischen Verschlüsselung durch die MKE (1, 1₁, 1ₙ) mit mindestens einer anderen, ebenfalls über diesen mindestens einen Nutzschlüssel verfügenden Kommunikationseinrichtung auszutauschender Daten, übertragen wird, wobei die Übertragung des mindestens einen quantensicheren Nutzschlüssels an die MKE (1, 1₁, 1ₙ) über eine Mobilfunkverbindung (6), das heißt über einen klassischen Kanal eines Mobilfunknetzes, erfolgt, indem von dem Bereitstellungsserver (2) der mindestens eine Nutzschlüssel durch Anwendung eines symmetrischen Verschlüsselungsverfahrens mit einem zuvor nach einem PQC-Verfahren, nämlich nach einem Verfahren der Post Quantum Cryptography, zwischen dem einen PQC-Server (4) umfassenden Bereitstellungsserver (2) und der zur Durchführung des PQC-Verfahrens ausgebildeten MKE (1, 1₁, 1ₙ) als gemeinsames Geheimnis ausgehandelten Schlüssel verschlüsselt und die dabei entstehende Bitsequenz über die Mobilfunkverbindung (6) an die MKE (1, 1₁, 1ₙ) übertragen wird, welche hieraus, durch erneute Ausführung des vorgenannten symmetrischen Verschlüsselungsverfahrens unter abermaliger Anwendung des gemeinsamen Geheimnisses von Bereitstellungsserver (2) und MKE (1, 1₁, 1ₙ) auf die empfangene Bitsequenz, den mindestens einen Nutzschlüssel extrahiert.

2. Verfahren nach Anspruch 1, **dadurch gekennzeichnet, dass** der Bereitstellungsserver (2) und die MKE (1, 1₁, 1ₙ) sich vor der Aushandlung des gemeinsamen, zur symmetrischen Verschlüsselung des mindestens einen Nutzschlüssels verwendeten Geheimnisses untereinander durch den Austausch einer mittels eines PQC-Signierverfahrens signierten Nachricht authentifizieren.

3. Verfahren nach Anspruch 1 oder 2, **dadurch gekennzeichnet, dass** die Übertragung des mindestens einen Nutzschlüssels an die MKE (1, 1₁, 1ₙ) mit einer Bitsequenz erfolgt, welche von dem Bereitstellungsserver (2) gebildet wird durch eine bitweise XOR-Verknüpfung des mindestens einen Nutzschlüssels mit dem zwischen dem Bereitstellungsserver (2) und der MKE (1, 1₁, 1ₙ) ausgehandelten gemeinsamen Geheimnis, wobei der mindestens eine Nutzschlüssel durch die MKE (1, 1₁, 1ₙ) aus der von ihm empfangenen, den mindestens einen Nutzschlüssel enthaltenden Bitsequenz extrahiert wird durch abermalige bitweise XOR-Verknüpfung dieser Bitsequenz mit dem gemeinsamen Geheimnis von Bereitstellungsserver (2) und MKE (1, 1₁, 1ₙ).

4. Verfahren nach Anspruch 1 oder 2, **dadurch gekennzeichnet, dass** die symmetrische Verschlüsselung des mindestens einen an die MKE (1, 1₁, 1ₙ) zu übertragenden Nutzschlüssels durch den Bereitstellungsserver (2) mittels des AES, das heißt mittels einer Blockchiffre nach dem Advanced Encryption Standard, unter Verwendung des zwischen Bereitstellungsserver (2) und MKE (1, 1₁, 1ₙ) ausgehandelten gemeinsamen Geheimnisses erfolgt.

5. Verfahren nach einem der Ansprüche 1 bis 4, **dadurch gekennzeichnet, dass** das zur symmetrischen Verschlüsselung des mindestens einen Nutzschlüssels verwendete, nach dem PQC-Verfahren ausgehandelte gemeinsame Geheimnis von Bereitstellungsserver (2) und MKE (1, 1₁, 1ₙ) ebenfalls ein durch die quantenmechanischen Mittel des Bereitstellungsservers (2) erzeugter quantensicherer Schlüssel ist, der zwischen dem Bereitstellungsserver (2) und der MKE (1, 1₁, 1ₙ) nach dem Public-Key-Prinzip per Key Encapsulation ausgetauscht wird.

6. Verfahren nach einem der Ansprüche 1 bis 5, **dadurch gekennzeichnet, dass** quantensichere Schlüssel, nämlich insbesondere der mindestens eine Nutzschlüssel, durch einen QRNG, nämlich einen Quantum Random Number Generator, des Bereitstellungsservers (2) erzeugt werden.

7. Verfahren nach einem der Ansprüche 1 bis 5, **dadurch gekennzeichnet, dass** quantensichere Schlüssel, nämlich insbesondere der mindestens eine Nutzschlüssel, durch den als Teil eines Netzwerkknotens ausgebildeten Bereitstellungsserver (2) im Zusammenwirken mit einem anderen mit ihm über einen Quantenkanal verbundenen Netzwerkknoten nach einem QKD-Verfahren erzeugt werden.

8. Verfahren nach einem der Ansprüche 1 bis 5, **dadurch gekennzeichnet, dass** quantensichere Schlüssel, nämlich insbesondere der mindestens eine Nutzschlüssel, durch einen Quantencomputer mit überwachter Entropie und überwachter Authentizität des Bereitstellungsservers (2) erzeugt werden.

9. Verfahren nach einem der Ansprüche 1 bis 8, **dadurch gekennzeichnet, dass** der mindestens eine Nutzschlüssel in der MKE (1, 1₁, 1ₙ) zur späteren Verwendung in einem durch ein Key-Management verwalteten Schlüsselspeicher (7) gespeichert wird.

10. Verfahren nach einem der Ansprüche 1 bis 9, dass das gemeinsame Geheimnis von Bereitstellungsserver (2) und MKE (1, 1₁, 1ₙ) sowie der mittels dieses gemeinsamen Geheimnisses symmetrisch verschlüsselte mindestens eine Nutzschlüssel jeweils über eine VPN-Verbindung übertragen werden.

11. Verfahren nach einem der Ansprüche 1 bis 10, **dadurch gekennzeichnet, dass** der mindestes eine quantensichere Nutzschlüssel von der MKE (1, 1₁, 1ₙ) für einen verschlüsselten Datenaustausch mit einer anderen MKE (1, 1₁, 1ₙ) verwendet wird, der unter Verwendung dieses mindestens einen Nutzschlüssels über den Bereitstellungsserver (2) oder direkt mit der anderen, zuvor durch den Bereitstellungsserver (2) ebenfalls unter Anwendung eines PQC-Verfahrens mit demselben mindestens einen Nutzschlüssel versorgten MKE (1, 1₁, 1ₙ) erfolgt.

12. Kommunikationseinrichtung, nämlich mobilfunknetzbasierte Kommunikationseinrichtung MKE (1, 1₁, 1ₙ), das heißt Kommunikationseinrichtung für einen über ein Mobilfunknetz erfolgenden Datenaustausch mit mindestens einer anderen Kommunikationseinrichtung, mindestens aufweisend Sende- und Empfangsmittel zur Nutzung eines klassischen Kanals des Mobilfunknetzes, eine Steuer- und Verarbeitungseinrichtung und Speichermittel, und selbst nicht über quantenmechanische Mittel verfügend, wobei die MKE (1, 1₁, 1ₙ) über Mittel zur Datenverschlüsselung und über PQC-Mittel (5), nämlich über Mittel zur Nutzung mindestens eines Verfahrens der Post Quantum Cryptography zur Aushandlung mit einer anderen Kommunikationseinrichtung als gemeinsames Geheimnis genutzter quantensicherer Schlüssel, verfügt, wobei die Mittel zur Datenverschlüsselung und die PQC-Mittel (5) innerhalb der MKE (1, 1₁, 1ₙ) jeweils als selbstständige Einheiten oder als Teil von dessen Steuer- und Verarbeitungseinrichtung ausgebildet sind.

13. MKE nach Anspruch 12, **dadurch gekennzeichnet, dass** das diese mit einem als Teil eines Hardwaresicherheitsmoduls ausgebildeten Schlüsselspeicher (7) zur Speicherung von dem Bereitstellungsserver (2) empfangener Nutzschlüssel ausgestattet ist.

14. System für die Bereitstellung quantensicherer Schlüssel zur Verwendung mit einer selbst nicht über quantenmechanische Mittel verfügenden, mobilfunknetzbasierten Kommunikationseinrichtung MKE (1, 1₁, 1ₙ), das heißt einer Kommunikationseinrichtung, welche Daten mit anderen Kommunikationseinrichtungen über ein Mobilfunknetz austauscht, mindestens umfassend
- einen mit quantenmechanischen Mitteln (3) zur Erzeugung quantensicherer Schlüssel ausgestatteten Bereitstellungsserver (2), welcher zur Aussendung von Daten, wie mithilfe der quantenmechanischen Mittel (3) erzeugter Schlüssel, über ein Mobilfunknetz ausgebildet ist,
- mindestens eine nicht mit quantenmechanischen Mitteln ausgestattete MKE (1, 1₁, 1ₙ), welche ausgebildet ist zum Empfang mindestens eines durch den Bereitstellungsserver (2) mithilfe seiner quantenmechanischen Mittel (3) erzeugten Schlüssels über eine Mobilfunkverbindung und für eine Verwendung dieses mindestens einen Schlüssels als quantensicheren Nutzschlüssel zur symmetrischen Verschlüsselung von der MKE (1, 1₁, 1ₙ) mit mindestens einer anderen, ebenfalls über diesen mindestens einen Nutzschlüssel verfügenden Kommunikationseinrichtung auszutauschender Daten, wobei es sich bei dieser mindestens einen anderen mobilen Kommunikationseinrichtung um den Bereitstellungsserver (2) selbst oder um eine andere mit diesem gemeinsam in einem Netzwerkknoten angeordnete Einrichtung handeln kann,
wobei sowohl der Bereitstellungsserver (2) als auch die mindestens eine MKE (1, 1₁, 1ₙ) über Mittel (4, 5) verfügen zur Aushandlung eines von ihnen zur symmetrisch verschlüsselten Übertragung mindestes eines durch den Bereitstellungsserver quantenmechanisch erzeugten Nutzschlüssels verwendeten gemeinsamen Geheimnisses nach einem PQC-Verfahren, nämlich nach einem Verfahren der Post Quantum Cryptography.

15. System nach Anspruch 14, **dadurch gekennzeichnet, dass** dieses mindestens eine weitere MKE (1, 1₁, 1ₙ) umfasst, welche ausgebildet ist für den Bezug mindestes eines bei dem Bereitstellungsserver (2) quantenmechanisch erzeugten Nutzschlüssels durch eine verschlüsselte Übertragung dieses mindestens einen Nutzschlüssels unter Verwendung eines zuvor zwischen dem Bereitstellungsserver (2) und dieser mindestens einen weiteren MKE (1, 1₁, 1ₙ) nach einem PQC-Verfahren ausgehandelten gemeinsamen Geheimnisses.

## Claims

1. Method for the provision of quantum-safe keys generated with the aid of quantum mechanical means for use with mobile radio network-based communication devices MKE (1, 1₁, 1ₙ) which themselves do not have quantum mechanical means and which exchange data with other communication devices via a mobile radio network, wherein at least one quantum-safe key is transmitted to a MKE (1, 1₁, 1ₙ) by a provision server (2), which is equipped with quantum mechanical means (3) for generating said at least one quantum-safe key, for use as useful key, that is to say for symmetric encryption of data to be exchanged by the MKE (1, 1₁, 1ₙ) with at least one other communication device likewise having this at least one useful key, wherein the at least one quantum-safe useful key is transmitted to the MKE (1, 1₁, 1ₙ) via a mobile radio connection (6), that is to say via a traditional channel of a mobile radio network, by a procedure in which, by way of the provision server (2), the at least one useful key is encrypted by application of a symmetric encryption method with a key negotiated as shared secret beforehand according to a PQC method, namely according to a post-quantum cryptography method, between the provision server (2), comprising a PQC server (4), and the MKE (1, 1₁, 1ₙ) designed for carrying out the PQC method, and the resulting bit sequence is transmitted via the mobile radio connection (6) to the MKE (1, 1₁, 1ₙ), which extracts the at least one useful key therefrom by way of the aforementioned symmetric encryption method being carried out once again with renewed application of the shared secret from provision server (2) and MKE (1, 1₁, 1ₙ) to the received bit sequence.

2. Method according to Claim 1, **characterized in that** the provision server (2) and the MKE (1, 1₁, 1ₙ), before negotiating among one another the shared secret used for symmetric encryption of the at least one useful key, authenticate themselves by exchanging a message signed by means of a PQC signing method.

3. Method according to Claim 1 or 2, **characterized in that** the at least one useful key is transmitted to the MKE (1, 1₁, 1ₙ) with a bit sequence formed by the provision server (2) by way of a bitwise XOR logic combination of the at least one useful key with the shared secret negotiated between the provision server (2) and the MKE (1, 1₁, 1ₙ), wherein the at least one useful key is extracted by the MKE (1, 1₁, 1ₙ) from the bit sequence received by the latter and containing the at least one useful key, by way of renewed bitwise XOR logic combination of this bit sequence with the shared secret from provision server (2) and MKE (1, 1₁, 1ₙ).

4. Method according to Claim 1 or 2, **characterized in that** the symmetric encryption of the at least one useful key to be transmitted to the MKE (1, 1₁, 1ₙ) is effected by the provision server (2) by means of the AES, that is to say by means of a block cipher according to the Advanced Encryption Standard, using the shared secret negotiated between provision server (2) and MKE (1, 1₁, 1ₙ).

5. Method according to any of Claims 1 to 4, **characterized in that** the shared secret from provision server (2) and MKE (1, 1₁, 1ₙ) used for symmetric encryption of the at least one useful key and negotiated according to the PQC method is likewise a quantum-safe key which is generated by the quantum mechanical means of the provision server (2) and which is exchanged between the provision server (2) and the MKE (1, 1₁, 1ₙ) according to the public key principle by way of key encapsulation.

6. Method according to any of Claims 1 to 5, **characterized in that** quantum-safe keys, namely in particular the at least one useful key, are generated by a QRNG, namely a quantum random number generator, of the provision server (2) .

7. Method according to any of Claims 1 to 5, **characterized in that** quantum-safe keys, namely in particular the at least one useful key, are generated by the provision server (2), designed as part of one network node, in cooperation with another network node, connected to it via a quantum channel, according to a QKD method.

8. Method according to any of Claims 1 to 5, **characterized in that** quantum-safe keys, namely in particular the at least one useful key, are generated by a quantum computer with monitored entropy and monitored authenticity of the provision server (2).

9. Method according to any of Claims 1 to 8, **characterized in that** the at least one useful key is stored in the MKE (1, 1₁, 1ₙ) for later use in a key store (7) managed by a key management.

10. Method according to any of Claims 1 to 9, **characterized in that** the shared secret from provision server (2) and MKE (1, 1₁, 1ₙ) and also the at least one useful key symmetrically encrypted by means of this shared secret are transmitted in each case via a VPN connection.

11. Method according to any of Claims 1 to 10, **characterized in that** the at least one quantum-safe useful key from the MKE (1, 1₁, 1ₙ) is used for an encrypted data exchange with another MKE (1, 1₁, 1ₙ), which exchange is effected using this at least one useful key via the provision server (2) or directly with the other MKE (1, 1₁, 1ₙ), which has been supplied with the same at least one useful key beforehand by way of the provision server (2) likewise with application of a PQC method.

12. Communication device, namely mobile radio network-based communication device MKE (1, 1₁, 1ₙ), that is to say communication device for a data exchange with at least one other communication device that is effected via a mobile radio network, at least comprising transmitting and receiving means for using a traditional channel of the mobile radio network, a control and processing device and storage means, and itself not having quantum mechanical means, wherein the MKE (1, 1₁, 1ₙ) has means for data encryption and PQC means (5), namely means for using at least one post-quantum cryptography method for negotiating with another communication device of quantum-safe keys used as shared secret, wherein the means for data encryption and the PQC means (5) within the MKE (1, 1₁, 1ₙ) are designed in each case as independent units or as part of the control and processing device thereof.

13. MKE according to Claim 12, **characterized in that** it is equipped with a key store (7) for storing useful keys received from the provision server (2), said key store being designed as part of a hardware security module.

14. System for the provision of quantum-safe keys for use with a mobile radio network-based communication device MKE (1, 1₁, 1ₙ) which itself does not have quantum mechanical means, that is to say a communication device which exchanges data with other communication devices via a mobile radio network, at least comprising
- a provision server (2), which is equipped with quantum mechanical means (3) for generating quantum-safe keys and is designed for sending data, such as keys generated with the aid of the quantum mechanical means (3), via a mobile radio network,
- at least one MKE (1, 1₁, 1ₙ) which is not equipped with quantum mechanical means and is designed for receiving at least one key, generated by the provision server (2) with the aid of the quantum mechanical means (3) thereof, via a mobile radio connection and for a use of this at least one key as quantum-safe useful key for symmetric encryption of data to be exchanged by the MKE (1, 1₁, 1ₙ) with at least one other communication device likewise having this at least one useful key, wherein this at least one other mobile communication device can be the provision server (2) itself or some other device arranged jointly with the latter in a network node, wherein both the provision server (2) and the at least one MKE (1, 1₁, 1ₙ) have means (4, 5) for negotiating a shared secret used by them for the symmetrically encrypted transmission of at least one useful key generated quantum-mechanically by the provision server, according to a PQC method, namely according to a post-quantum cryptography method.

15. System according to Claim 14, **characterized in that** it comprises at least one further MKE (1, 1₁, 1ₙ) designed for obtaining at least one useful key generated quantum-mechanically at the provision server (2) by way of an encrypted transmission of this at least one useful key using a shared secret negotiated beforehand between the provision server (2) and this at least one further MKE (1, 1₁, 1ₙ) according to a PQC method.

## Revendications

1. Procédé de mise à disposition de clés à sécurité quantique générées à l'aide de moyens quantiques et destinées à être utilisées avec des dispositifs de communication MKE (1, 1₁, 1ₙ) qui sont basés sur un réseau radio mobile, qui ne disposent pas eux-mêmes de moyens quantiques et qui échangent des données avec d'autres dispositifs de communication par le biais d'un réseau radio mobile, au moins une clé à sécurité quantique étant transmise à un MKE (1, 1₁, 1ₙ) par le biais d'un serveur de mise à disposition (2), qui est équipé de moyens quantiques (3) destinés à générer ladite clé, afin de l'utiliser comme clé utile, c'est-à-dire afin d'effectuer un cryptage symétrique de données que le MKE (1, 1₁, 1ₙ) doit échanger avec au moins un autre dispositif de communication disposant également de cette au moins une clé utile, la transmission de l'au moins une clé utile à sécurité quantique au MKE (1, 1₁, 1ₙ) étant effectuée par le biais d'une liaison radio mobile (6), c'est-à-dire par le biais d'un canal classique d'un réseau radio mobile, en ce que le serveur de mise à disposition (2) à l'au moins une clé utile de crypter à l'aide d'un procédé de cryptage symétrique avec une clé préalablement négociée comme un secret commun selon le procédé PQC, c'est-à-dire un procédé de cryptographie post-quantique, entre le serveur de mise à disposition (2), comprenant un serveur PQC (4), et le MKE (1, 1₁, 1ₙ) conçu pour exécuter le procédé PQC, et la séquence de bits résultante étant transmise par le biais de la liaison radio mobile (6) au MKE (1, 1₁, 1ₙ) qui en extrait l'au moins une clé utile en exécutant à nouveau le procédé de cryptage symétrique susmentionné en appliquant à nouveau le secret commun entre le serveur de mise à disposition (2) et le MKE (1, 1₁, 1ₙ) à la séquence de bits reçue.

2. Procédé selon la revendication 1, **caractérisé en ce que** le serveur de mise à disposition (2) et le MKE (1, 1₁, 1ₙ) s'authentifient entre eux avant de négocier le secret commun, utilisé pour le cryptage symétrique de l'au moins une clé utile, en échangeant un message signé à l'aide d'un procédé de signature PQC.

3. Procédé selon la revendication 1 ou 2, **caractérisé en ce que** la transmission de l'au moins une clé utile au MKE (1, 1₁, 1ₙ) est effectuée avec une séquence de bits qui est formée par le serveur de mise à disposition (2) par le biais d'une combinaison XOR bit par bit de l'au moins une clé utile avec le secret commun négocié entre le serveur de mise à disposition (2) et le MKE (1, 1₁, 1ₙ), l'au moins une clé utile étant extraite, par le MKE (1, 1₁, 1ₙ), de la séquence de bits, qui est reçue par celui-ci et qui contient l'au moins une clé utile, par une nouvelle combinaison XOR bit par bit de cette séquence de bits avec le secret commun entre le serveur de mise à dispositif (2) et le MKE (1, 1₁, 1ₙ).

4. Procédé selon la revendication 1 ou 2, **caractérisé en ce que** le cryptage symétrique de l'au moins une clé utile à transmettre au MKE (1, 1₁, 1ₙ) est effectué par le biais du serveur de mise à disposition (2) à l'aide de l'AES, c'est-à-dire à l'aide d'un cryptage par bloc selon la norme Advanced Encryption Standard, à l'aide du secret commun négocié entre le serveur de mise à disposition (2) et le MKE (1, 1₁, 1ₙ).

5. Procédé selon l'une des revendications 1 à 4, **caractérisé en ce que** le secret commun entre le serveur de mise à disposition (2) et le MKE (1, 1₁, 1ₙ), qui est utilisé pour le cryptage symétrique de l'au moins une clé utile et qui est négocié selon le procédé PQC, est également une clé à sécurité quantique qui est générée par les moyens quantiques du serveur de mise à disposition (2) et qui est échangée entre le serveur de mise à disposition (2) et le MKE (1, 1₁, 1ₙ) selon le principe de la clé publique par encapsulation de la clé.

6. Procédé selon l'une des revendications 1 à 5, **caractérisé en ce que** des clés à sécurité quantique, c'est-à-dire notamment l'au moins une clé utile, sont générées par un QRNG, c'est-à-dire un Quantum Random Number Generator, du serveur de mise à disposition (2).

7. Procédé selon l'une des revendications 1 à 5, **caractérisé en ce que** des clés à sécurité quantique, c'est-à-dire notamment l'au moins une clé utile, sont générées par le serveur de mise à disposition (2), conçu comme partie d'un noeud de réseau, en coopération avec un autre noeud de réseau, relié à celui-ci par le biais d'un canal quantique, selon un procédé QKD.

8. Procédé selon l'une des revendications 1 à 5, **caractérisé en ce que** des clés à sécurité quantique, c'est-à-dire notamment l'au moins une clé utile, sont générées par un ordinateur quantique à entropie surveillée et authenticité surveillée du serveur de mise à disposition (2).

9. Procédé selon l'une des revendications 1 à 8, **caractérisé en ce que** l'au moins une clé utile est mémorisée dans le MKE (1, 1₁, 1ₙ) en vue d'une utilisation ultérieure dans une mémoire de clés (7) gérée par un système de gestion de clés.

10. Procédé selon l'une des revendications 1 à 9, le secret commun entre le serveur de mise à disposition (2) et le MKE (1, 1₁, 1ₙ) ainsi que l'au moins une clé utile chiffrée symétriquement à l'aide de ce secret commun étant chacun transmis par le biais d'une liaison VPN.

11. Procédé selon l'une des revendications 1 à 10, **caractérisé en ce que** l'au moins une clé utile à sécurité quantique est utilisée par le MKE (1, 1₁, 1ₙ) pour effectuer avec un autre MKE (1, 1₁, 1ₙ) un échange de données cryptées qui est effectué à l'aide de cette au moins une clé utile par le biais du serveur de mise à disposition (2) ou directement avec l'autre MKE (1, 1₁, 1ₙ) préalablement pourvu de la même au moins une clé utile par le biais du serveur de mise à disposition (2), également à l'aide d'un procédé PQC.

12. Dispositif de communication, c'est-à-dire dispositif de communication MKE (1, 1₁, 1ₙ) basé sur un réseau radio mobile, c'est-à-dire dispositif de communication destiné à l'échange de données, par le biais d'un réseau radio mobile, avec au moins un autre dispositif de communication, ledit dispositif de communication comportant au moins des moyens d'émission et de réception destinés à utiliser un canal classique du réseau radio mobile, un dispositif de commande et de traitement et des moyens de mémorisation, et ne disposant pas lui-même de moyens quantiques, le MKE (1, 1₁, 1ₙ) disposant de moyens de cryptage de données et de moyens PQC (5), c'est-à-dire de moyens d'utilisation d'au moins un procédé de cryptographie post-quantique afin de négocier des clés à sécurité quantique utilisées comme secret commun avec un autre dispositif de communication, les moyens de cryptage de données et les moyens PQC (5), situés à l'intérieur du MKE (1, 1₁, 1ₙ), étant chacun conçus comme des unités indépendantes ou comme partie de son dispositif de commande et de traitement.

13. MKE selon la revendication 12, **caractérisé en ce que** celui-ci est équipé d'une mémoire de clés (7) conçue comme partie d'un module de sécurité matériel et destinée à mémoriser des clés utiles reçues par le serveur de mise à disposition (2).

14. Système de mise à dispositif de clés à sécurité quantique destinées à être utilisées avec un dispositif de communication MKE (1, 1ᵢ, 1ₙ), basé sur un réseau radio mobile, qui ne dispose pas lui-même de moyens quantiques, c'est-à-dire un dispositif de communication qui échange des données avec d'autres dispositifs de communication par le biais d'un réseau radio mobile, ledit système comprenant au moins
- un serveur de mise à disposition (2) qui est équipé de moyens quantiques (3) destinés à générer des clés à sécurité quantique et qui est conçu pour envoyer des données, telles que des clés générées à l'aide des moyens quantiques (3), par le biais d'un réseau radio mobile,
- au moins un MKE (1, 1₁, 1ₙ) qui n'est pas équipé de moyens quantiques et qui est conçu pour recevoir au moins une clé, générée par le serveur de mise à disposition (2) à l'aide de ses moyens quantiques (3), par le biais d'une liaison radio mobile et pour utiliser cette au moins une clé comme clé utile à sécurité quantique afin d'effectuer le cryptage symétrique de données que le MKE (1, 1₁, 1ₙ) doit échanger avec au moins un autre dispositif de communication qui dispose également de cette au moins une clé utile, cet au moins un autre dispositif de communication mobile pouvant être le serveur de mise à disposition (2) lui-même ou un autre dispositif disposé avec celui-ci dans un noeud de réseau, le serveur de mise à disposition (2) ainsi que l'au moins un MKE (1, 1₁, 1ₙ) disposant de moyens (4, 5) de négociation d'un secret commun utilisé par ceux-ci pour effectuer la transmission cryptée symétriquement d'au moins une clé utile, générée de manière quantique par le biais du serveur de mise à disposition, selon un procédé PQC, c'est-à-dire selon un procédé de Cryptographie Post Quantique.

15. Système selon la revendication 14, **caractérisé en ce qu'**il comprend au moins un autre MKE (1, 1₁, 1ₙ), qui est conçu pour obtenir au moins une clé utile générée de manière quantique au niveau du serveur de mise à disposition (2) par le biais d'une transmission cryptée de cette au moins une clé utile à l'aide d'un secret commun préalablement négocié selon un procédé PQC entre le serveur de mise à disposition (2) et cet au moins un autre MKE (1, 1₁, 1ₙ).
